# EUROPEAN PATENT SPECIFICATION

(11) **EP 3 831 191 B1**
(45) Date of publication and mention of the grant of the patent: **04.10.2023**
(21) Application number: 20207943.0
(22) Date of filing: 17.11.2020
(51) Int. Cl.: A01F 15/04

(54) **LARGE SQUARE BALER WITH ANGULAR BALE WRAP SYSTEM**
GROSSQUADERBALLENPRESSE MIT WINKELFÖRMIGEM BALLENWICKELSYSTEM
GRANDE PRESSE À BALLES CARRÉES AVEC SYSTÈME D'EMBALLAGE DE BALLES ANGULAIRE

(30) Priority: 06.12.2019 US 201916705293
(43) Date of publication of application: 09.06.2021
(73) Proprietor: Deere & Company, Moline, IL 61265 (US)
(72) Inventor: KHADASARE, SANTOSH, 68163 Mannheim (DE); MAHAJAN, SANDEEP, 68163 Mannheim (DE); JAWALE, VINIT, 68163 Mannheim (DE); HEMANT, KADAM T, 68163 Mannheim (DE); KULKARNI, NIKHIL, 68163 Mannheim (DE); TIWARI, SHARAD KUMAR, 68163 Mannheim (DE)
(74) Representative: Stein, Stefan

(56) References cited:
- WO-A1-00/36903
- WO-A1-2011/056063
- WO-A2-2006/137046
- US-A1- 2019 069 492

## Description

### TECHNICAL FIELD

The disclosure generally relates to a large square baler with an integrated bale wrapping system.

### BACKGROUND

Baling implements gather cut crop material and form the crop material into a bale. Generally, the bales may include either round cylindrical shape or a rectangular shape. The size of the bales may also vary. For example, the dimensions of a large rectangular shaped bale, commonly referred to as a "large square bale" may include end face dimensions between, for example, 3 and 5 feet, and length dimensions between, for example, 4 and 9 feet. In certain circumstances, it is desirable to wrap the bale in a wrap material. For example, in some circumstances, the bale may be completely wrapped in a plastic sheet.

Traditionally, operators wishing to wrap large square bales have formed the bales in the bailing implement, and then dropped the formed bales on the ground. After the formed bales have been deposited on the ground, a tractor pulling a separate wrapping implement picks up the large square bale and wraps the large square bale with plastic wrap material. This is an additional step which adds to the time to complete the bale. Additionally, traditional wrapping implements typically rotate or tumble the bale in three dimensions to ensure that all portions of the bale faces are completely covered. Because of this, the length of the large square bales that may be processed in these traditional square bale wrapping implements is limited. Generally, these types of wrapping implements are limited to large square bales having a length of less than 5 feet. US 2019/069492 A1 discloses a combination baling and wrapping machine to enclose harvested material in a protective layer.

### SUMMARY

A crop baling implement is provided. The crop baling implement includes a frame and a baling chamber attached to the frame. The baling chamber is configured to form crop material into a bale extending along a central longitudinal axis of the bale. An orbital support is attached to the frame rearward of the baling chamber. The orbital support is rotatable about a wrap axis and defines an open central region. The orbital support is positioned to receive the bale from the baling chamber and pass the bale through the open central region of the orbital support. A wrap roller is attached to and moveable with the orbital support. The wrap roller is configured to support a roll of wrap material thereon. A drive is coupled to the orbital support and operable to rotate the orbital support and the wrap roller about the wrap axis to wrap the wrap material around the bale as the bale moves through the open central region of the orbital support. A fixed support is attached to the frame. The fixed support rotatably supports the orbital support. A pivotal connection interconnects the frame and the fixed support. The pivotal connection defines a transverse axis. The fixed support is rotatable about the transverse axis relative to the frame. In an embodiment, the frame includes a bale chute supporting the fixed support. In a further embodiment, the crop baling implement comprising an actuator interconnecting the frame and the fixed support, wherein the actuator is operable to rotate the fixed support about the transverse axis. In another embodiment, the actuator includes a linear actuator operable to extend and retract to rotate the fixed support about the transverse axis. In a further embodiment, an orbital angle is less than ninety degrees (90°).

In one embodiment, the frame includes a bale chute, with the fixed support attached to the bale chute, such that the bale chute supports the fixed support. A plurality of rollers interconnects the orbital support and the fixed support to provide or enable rotation of the orbital support relative to the fixed support.

In one aspect of the disclosure, the bale follows a path while moving through the open central region of the orbital support. The orbital support is positioned to define an orbital plane intersecting the path of the bale. The orbital plane intersects the path of the bale to form an orbital angle therebetween. In one embodiment, the orbital angle is approximately perpendicular to the path of the bale, i.e., the orbital angle is approximately equal to ninety degrees (90°). In another embodiment, the orbital angle is less than ninety degrees (90°). In one example embodiment, the orbital angle is between the range of forty degrees (40°) and eighty degrees (80°). In another example embodiment, the orbital angle is between the range of one hundred degrees (100°) and one hundred forty degrees (140°).

In one embodiment, the orbital angle is variable with rotation of the fixed support about the transverse axis.

In one aspect of the disclosure, an actuator interconnects the frame and the fixed support. The actuator is operable to rotate the fixed support about the transverse axis. In one embodiment, the actuator includes a linear actuator operable to extend and retract to rotate the fixed support about the transverse axis. The linear actuator may include, but is not limited to, a hydraulic cylinder or an electric actuator.

In one aspect of the disclosure, a wrap cutter is attached to and moveable with the orbital support. The wrap cutter is disposed adjacent to the wrap roller. The wrap cutter is operable to secure and cut the wrap material dispensed from the wrap roller.

In another aspect of the disclosure, a tray attached to the frame and disposed rearward of the orbital support. The tray is positioned to receive the bale passing through the open central region of the orbital support.

Accordingly, the baling implement described herein both forms the bale and wraps the bale with the wrap material as the bale is discharged from the baling chute. The orbital support rotates around the bale as the bale is moved through the open central region of the orbital support. As the orbital support rotates around the bale, the wrap material is un-wound from the roll of wrap material disposed on the wrap roller, thereby wrapping the bale. The orbital support may be positioned at the wrap angle relative to the path of the bale so that the end faces of the bale are covered. In addition, the orbital support may be oscillated about the transverse axis to further improve wrap coverage on the end faces of the bale. In order to cover the forward end face of the bale, the discharge speed of the bale is increased to gain separation between the bale and the subsequent bale being formed in the baling chamber, thereby providing space to wrap the forward end face of the bale.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a crop baling implement showing a wrap system in a deployed position.
FIG. 2 is a schematic perspective view of a bale.
FIG. 3 is a schematic partial perspective view of the baling implement showing the wrap system in a deployed position.
FIG. 4 is a schematic partial side view of the baling implement showing the wrap system in the deployed position.
FIG. 5 is a schematic side view of the crop baling implement showing the wrap system in a transport position.
FIG. 6A is a schematic perspective view of a wrap cutter of the wrap system in a retracted position.
FIG. 6B is a schematic perspective view of the wrap cutter in an extended position.
FIG. 7 is a schematic side view of the crop baling implement showing a first bale being wrapped and followed by a subsequent second bale.
FIG. 8 is a schematic side view of the crop baling implement showing the first bale separated from the second bale.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "substantially" or "approximately" are understood by those of ordinary skill to refer to reasonable ranges outside of the given value, for example, general tolerances associated with manufacturing, assembly, and use of the described embodiments.

Referring to the Figures, wherein like numerals indicate like parts throughout the several views, a crop baling implement is generally shown at 20. The crop baling implement 20 shown in the Figures and described herein is embodied as a large square baler. However, it should be appreciated that that the teachings of this disclosure may be applied to other types and configurations of the crop baling implement 20.

Aspects and/or features of the crop baling implement 20 may be described below with reference to a Cartesian Coordinate system having an X-axis 22, a Y-axis 24, and a Z-axis 26. The X-axis 22 and Z-axis 26 form a generally horizontal plane, generally parallel with a ground surface. The X-axis 22 and the Y-axis 24 form a generally vertical plane that lies on and parallel with a centerline of the crop baling implement 20. The centerline of the crop baling implement 20 extends between a forward end and a rearward end of the crop baling implement 20. The Y-axis 24 and the Z-axis 26 form a generally vertical plane that is generally perpendicular to the centerline of the crop baling implement 20.

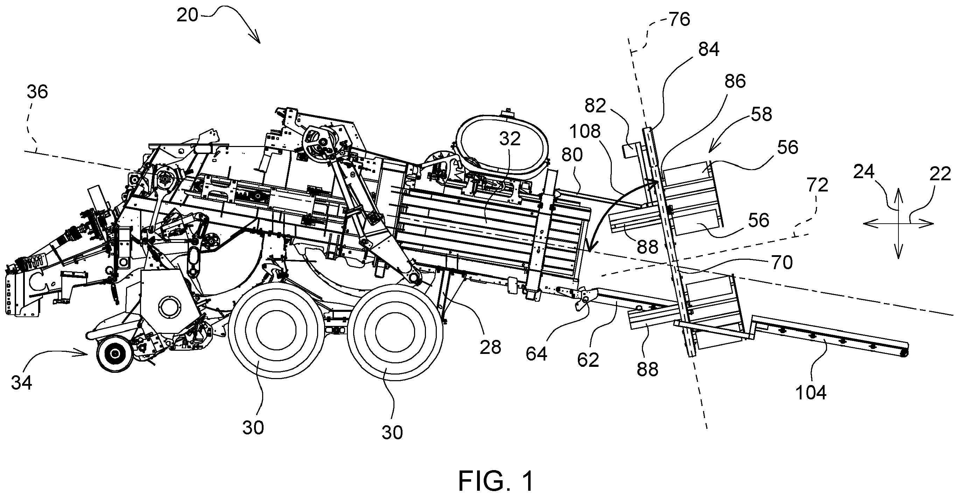

Referring to FIG. 1, and as is understood by those skilled in the art, the crop baling implement 20 includes a frame 28 supporting one or more ground engaging element 30, e.g., wheels or tracks. The frame 28 includes and/or supports a baling chamber 32. The crop baling implement 20 gathers cut crop material and moves the crop material into the baling chamber 32 with a feed system 34. The baling chamber 32 includes walls that form the crop material into a rectangular shape, i.e., a bale 33. A plunger (not shown) compresses the crop material into a flake. The process is repeated with each flake adding to a length 42 of the bale 33. When the bale 33 reaches a desired length 42, measured along a central longitudinal axis 36 of the bale 33, a knotter system (not shown) ties a twine around the bale 33 to secure the flakes together and form the bale 33.

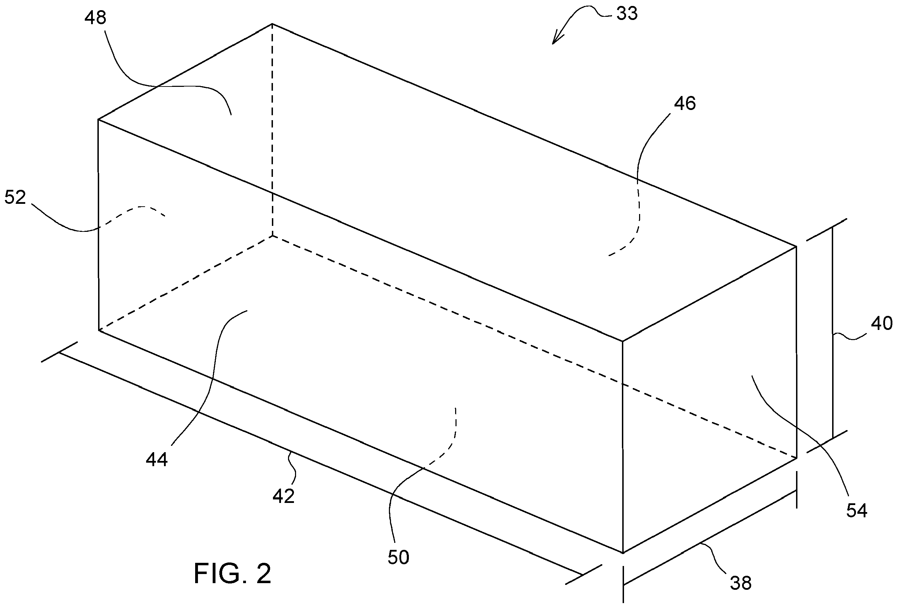

The bale 33 of crop material formed by the crop baling implement 20 described herein may be referred to as large square bales. Typically, referring to FIG. 2, each bale 33 has a width 38 approximately equal to three or four feet, a height 40 approximately equal to three or four feet, and a length 42 that may vary between approximately four to eight feet. It should be appreciated that the dimensions of the bale 33 formed by the example embodiment of the crop baling implement 20 may vary from the example dimensions described above. The operations of the crop baling implement 20 used to form and tie the bale 33 are known to those skilled in the art, are not pertinent to the teachings of the disclosure, and are therefore not described in detail herein.

As shown in FIG. 2, the bale 33 formed by the example embodiment of the crop baling implement 20 described herein includes a left side face 44, a right side face 46, a top face 48, a bottom face 50, a forward end face 52, and a rearward end face 54. Each of the left side face 44, the right side face 46, the top face 48, and the bottom face 50 extend along the central longitudinal axis 36 of the bale 33, and may be referred to as longitudinal faces of the bale 33. Each of the forward end face 52 and the rearward end face 54 extend transverse to the central longitudinal axis 36 of the bale 33, and may be referred to as transverse faces of the bale 33.

Certain crops and/or crops having a certain moisture content, e.g., silage, may need to be wrapped with a wrap material 56, such as but not limited to a solid plastic wrap, to completely enclose the bale 33 in a substantially air tight wrapping. In other embodiments, the bale 33 may be wrapped with a non-solid, net type wrap material 56. In order to wrap the bales 33 with the wrap material 56, the crop baling implement 20 is equipped with a wrap system 58.

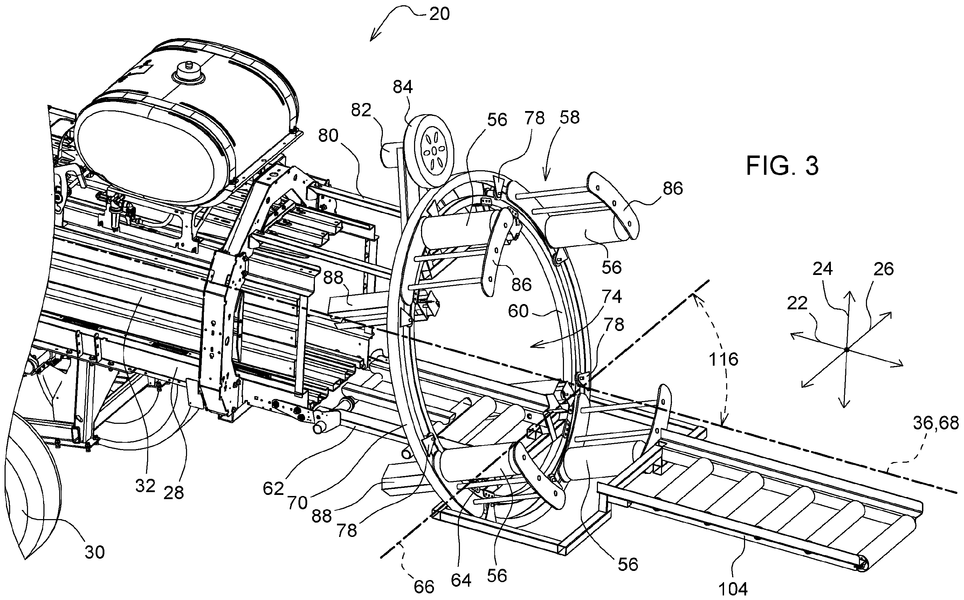

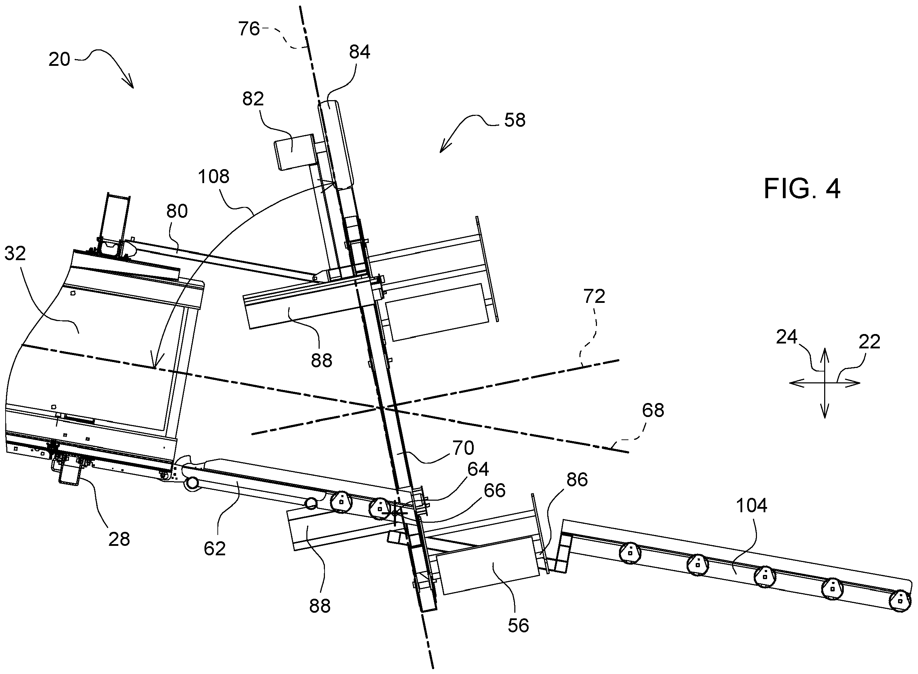

Referring to FIGS. 3 and 4, the wrap system 58 is configured to wrap the longitudinal faces of the bale 33, i.e., left side face 44, the right side face 46, the top face 48, and the bottom face 50, as well as the transverse faces of the bale 33, i.e., the forward end face 52 and the rearward end face 54, as the bale 33 is discharged from the baling chamber 32.

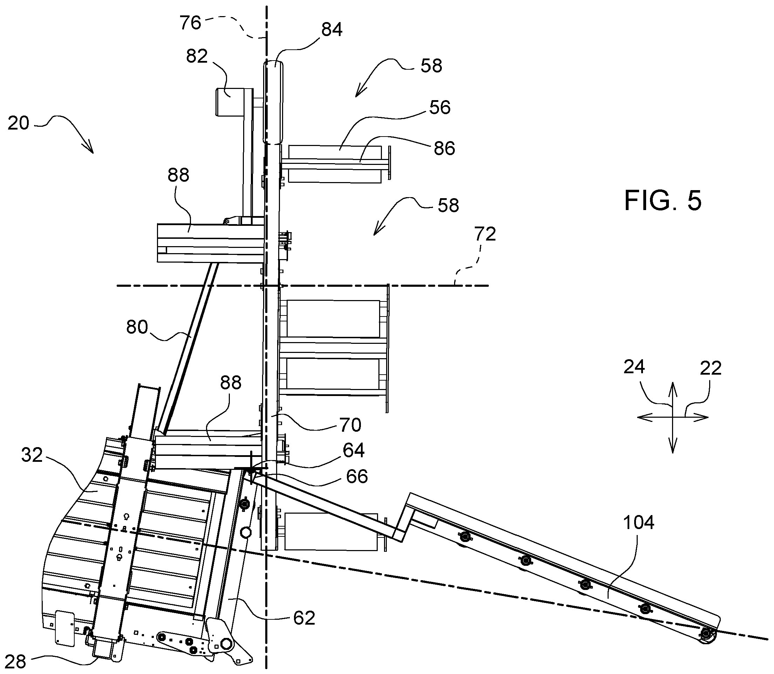

The wrap system 58 includes a fixed support 60 attached to the frame 28. In the example embodiment shown in the Figures, the frame 28 includes a bale 33 chute 62. The bale 33 chute 62 is attached to a rearward end of the frame 28, rearward of the baling chamber 32. The bale 33 chute 62 receives the bale 33 as the bale 33 is discharged from the baling chamber 32. The bale 33 chute 62 may include rollers and/or slides to facilitate the movement of the bale 33 down the bale 33 chute 62. The bale 33 chute 62 may be pivotably attached to the frame 28, to move between an upright position for transport, such as shown in FIG. 5, and a lowered position for production, such as shown in FIGS. 3 and 4. In the example embodiment shown in the Figures and described herein, the fixed support 60 is attached to the bale 33 chute 62. As such, the fixed support 60 is disposed rearward of the baling chamber 32. However, it should be appreciated that the fixed support 60 may be attached to the frame 28 in some other manner and at some other location.

The fixed support 60 may be attached to the frame 28 via a pivotal connection 64. The pivotal connection 64 defines a transverse axis 66 with the fixed support 60 rotatable about the transverse axis 66 relative to the frame 28. The transverse axis 66 is generally parallel with the Z-axis 26, and is generally perpendicular to a longitudinal axis 68 of the frame 28.

The fixed support 60 includes a structural member formed into an annular or circular shape that encircles or surrounds the bale 33 as the bale 33 is discharged from the baling chamber 32 and onto the bale 33 chute 62. The fixed support 60 rotatably supports an orbital support 70. The orbital support 70 is rotatable about a wrap axis 72, and is moveable about the wrap axis 72 relative to the fixed support 60. The orbital support 70 defines an open central region 74 and is positioned to receive the bale 33 from the baling chamber 32 and/or the bale 33 chute 62, and pass the bale 33 through the open central region 74 of the orbital support 70. The orbital support 70 also includes an annular or circular shape corresponding to that of the fixed support 60. The orbital support 70 encircles or surrounds the bale 33 as the bale 33 is discharged from the baling chamber 32 and onto the bale 33 chute 62.

As noted above, the fixed support 60 and the orbital support 70 include generally annular or circular structures that are disposed on an orbital plane 76. The orbital plane 76 on which the fixed support 60 and the orbital support 70 are disposed on is generally perpendicular to the longitudinal axis 68 of the frame 28, and is generally parallel with the Z-axis 26. The wrap axis 72 is disposed at a center of the orbital support 70, and extends generally along the longitudinal axis 68 of the frame 28, along the X-axis 22 and perpendicular to the Z-axis 26. Accordingly, the orbital support 70 rotates about the wrap axis 72 on the orbital plane 76.

The wrap system 58 further includes a plurality of roller assemblies 78 interconnecting the orbital support 70 and the fixed support 60. The roller assemblies 78 secure the orbital support 70 to the fixed support 60, and allow rotation of the orbital support 70 relative to the fixed support 60. As such, the shape of the fixed support 60 generally defines an endless loop forming a path 106 that the orbital support 70 follows as the orbital support 70 moves or rotates about the wrap axis 72 relative to the fixed support 60. The roller assemblies 78 may be constructed in any manner that secures the orbital support 70 relative to the fixed support 60 and allows rotation therebetween. For example, the roller assemblies 78 may include a bracket that is attached to the fixed support 60, with a pair of rotatable wheels or discs attached to the bracket on opposing sides of the orbital support 70. It should be appreciated that the roller assemblies 78 may be constructed differently than described herein.

An actuator 80 may interconnect the frame 28 and the fixed support 60. The actuator 80 is operable to rotate the fixed support 60 about the transverse axis 66. It should be appreciated that the orbital support 70, and the orbital plane 76 move with the fixed support 60 as the fixed support 60 rotates about the transverse axis 66. The actuator 80 may include any device capable of rotating the fixed support 60 relative to the frame 28. For example, the actuator 80 may include, but is not limited to, a linear actuator 80 operable to extend and retract to rotate the fixed support 60 about the transverse axis 66. In one example, the actuator 80 may include one or more hydraulic cylinders operable to extend and retract. In another embodiment, the actuator 80 may include one or more electrically operated linear actuators. While the actuator 80 is shown in the Figures and described herein as including a linear actuator, it should be appreciated that the actuator 80 may be configured differently and may not include a linear actuator.

The wrap system 58 may further include a drive 82. The drive 82 may be coupled to the orbital support 70 and operable to rotate the orbital support 70 about the wrap axis 72. The drive 82 may be configured in any manner capable of rotating the orbital support 70 about the wrap axis 72 and relative to the fixed support 60. For example, the drive 82 may include a motor generating a torque, that is transferred to the orbital support 70 to cause the orbital support 70 to rotate. The motor may include, but is not limited to, an electric motor, a hydraulic motor, a pneumatic motor, an internal combustion engine, or some other similar device. The motor may be coupled to the orbital support 70 in any suitable manner. For example, the motor may be coupled to the orbital support 70 via a gear train. In another embodiment, an output of the motor is attached to a wheel 84, which is engaged in frictional contact with the orbital support 70. Rotation of the wheel 84 causes the orbital support 70 to rotate.

At least one wrap roller 86 is attached to and moveable with the orbital support 70. The wrap roller 86 is configured to support a roll of the wrap material 56 thereon, and allow the wrap material 56 to un-wind from the roll of wrap material 56 as the orbital support 70 rotates about the wrap axis 72. The wrap roller 86 may include, but is not limited to, an elongated post or tube or some other similar device. The wrap roller 86 is moveable with the orbital support 70 about the bale 33 as the bale 33 moves through the open central region 74 of the orbital support 70 to wind the wrap material 56 around the bale 33 as the bale 33 moves therethrough.

As shown in FIG. 3, a wrap cutter 88 is attached to and moveable with the orbital support 70. The wrap cutter 88 is disposed adjacent to the wrap roller 86. The wrap cutter 88 is operable to secure and cut the wrap material 56 dispensed from the wrap roller 86. In the example embodiment shown in the Figures and described herein, each wrap roller 86 includes a respective wrap cutter 88 positioned immediately adjacent thereto. As such, the example embodiment shown in the Figures includes four wrap rollers 86, with each having a respective wrap cutter 88.

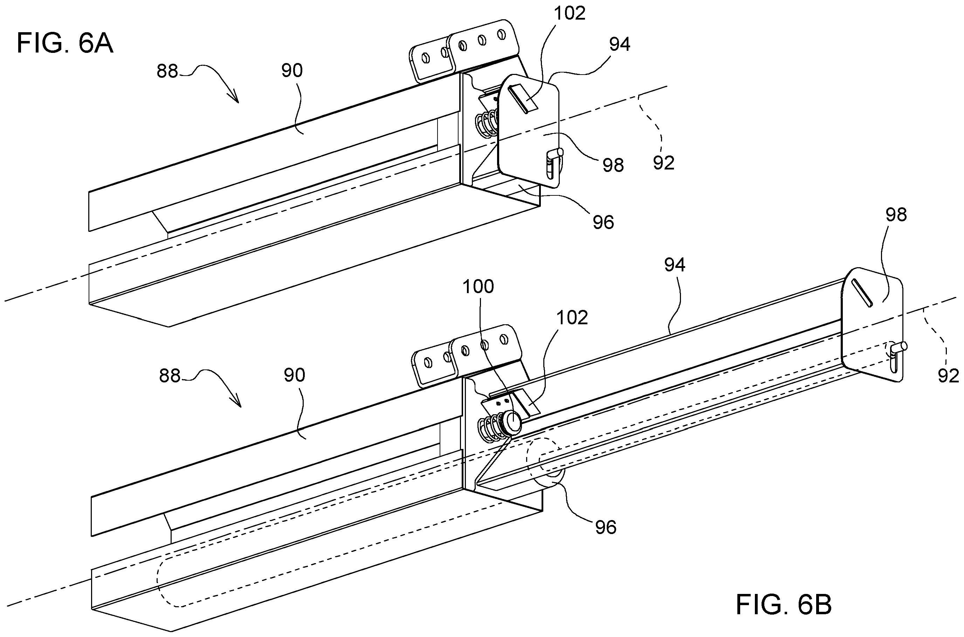

The wrap cutter 88 may be configured in any suitable manner capable of securing and cutting the wrap material 56, and then securing the wrap material 56 until the next bale 33 wrapping cycle is commenced. For example, referring to FIGS. 6A and 6B, wrap cutter 88 includes a base 90 that extends along a cutter axis 92. An extension sleeve 94 is slideably supported by the base 90 for movement along the cutter axis 92. An actuator 96, such as but not limited to a hydraulic cylinder is coupled to the extension sleeve 94 and operable to extend and retract the extension sleeve 94. A moveable engaging fixture 98 is disposed at a distal end of the extension sleeve 94, and is moveable with the extension sleeve 94. A fixed engaging fixture 100 is attached to the base 90. During operation, the moveable engaging fixture 98 grasps the wrap material 56 as the extension sleeve 94 is retracted. The wrap material 56 is secured between the moveable engaging fixture 98 and the fixed engaging fixture 100 when the extension sleeve 94 is in a fully retracted position. Additionally, movement of the extension sleeve 94 into the fully retracted position moves the wrap material 56 across a cutting knife 102, thereby cutting the wrap material 56.

Referring to FIGS. 3 and 4, a tray 104 is attached to the frame 28 and disposed rearward of the orbital support 70. In the example embodiment shown in the Figures and described herein, the tray 104 is attached to the fixed support 60, which connects the tray 104 to the frame 28. The tray 104 is positioned to receive the bale 33 as the bale 33 passes through the open central region 74 of the orbital support 70. Accordingly, the bale 33 is discharged from the baling chamber 32 onto the bale 33 chute 62, moves on the bale 33 chute 62 generally along the X-axis 22 and through the open central region 74 of the orbital support 70, and then onto the tray 104. The bale 33 may then be moved on the tray 104 and deposited on the ground. The tray 104 may be configured in any manner capable of supporting the bale 33 as the bale 33 moves from the bale 33 chute 62 to the tray 104. Additionally, the tray 104 may be rotatably attached to the fixed support 60 and fold-up for transport, such as shown in FIG. 5.

Referring to FIGS. 1, and 3-4, the bale 33 follows a path 106 or route while moving through the open central region 74 of the orbital support 70. The path 106 of the bale 33 is generally along the X-axis 22, and is parallel with the bale 33 chute 62 and the tray 104. As noted above, the orbital support 70 is positioned to define the orbital plane 76. The orbital plane 76 intersects the path 106 of the bale 33 and forms an orbital angle 108 therebetween relative to the path 106 of the bale 33. The orbital angle 108 is defined on a plane defined by the X-axis 22 and the Y-axis 24. The orbital angle 108 is variable with rotation of the fixed support 60 about the transverse axis 66. As such, as the fixed support 60 is rotated about the transverse axis 66, the orbital support 70 and the orbital plane 76 also rotate about the transverse axis 66. As the orbital plane 76 changes position relative to the path 106 of the bale 33, the orbital angle 108 changes accordingly. In one embodiment, the orbital angle 108 may be approximately equal to ninety degrees (90°). In another embodiment, the orbital angle 108 is less than ninety degrees (90°). For example, in one embodiment, the orbital angle 108 is between the range of forty degrees (40°) and eighty degrees (80°). In another embodiment, the orbital angle 108 is greater than ninety degrees (90°). For example, in one embodiment, the orbital angle 108 is between the range of one hundred degrees (100°) and one hundred forty degrees (140°).

In another embodiment, the wrap system 58 may be rotated and/or oscillated laterally, i.e., left and right about the Y-axis 24, such that an angle 116 (shown in FIG. 3) between the transverse axis 66 and the longitudinal axis 68 of the frame 28 is variable.

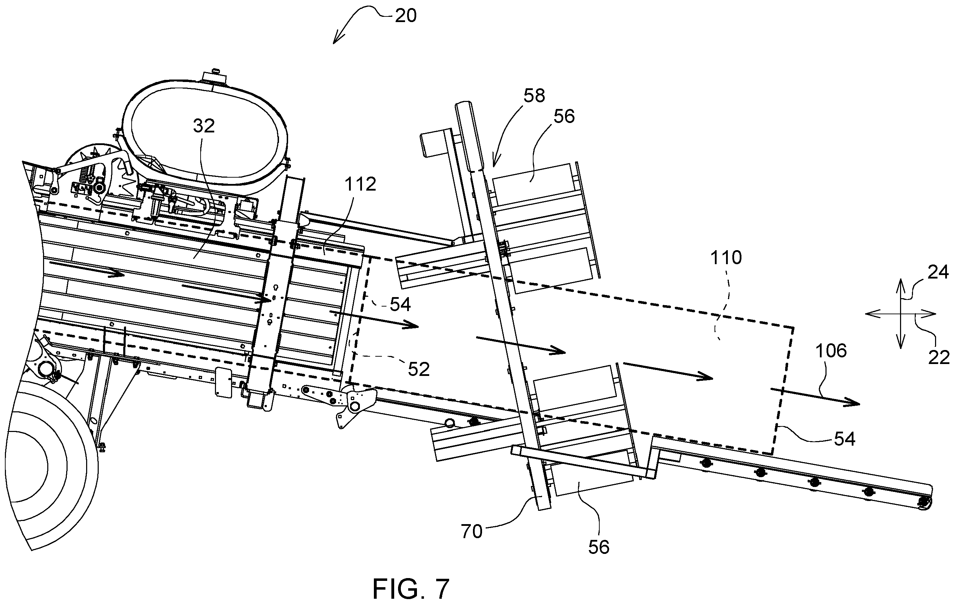

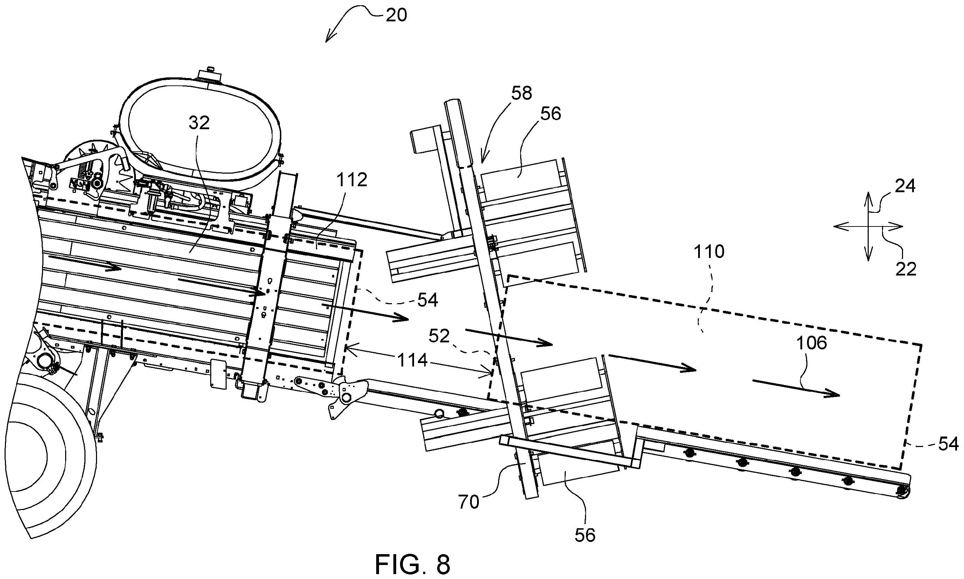

Referring to FIGS. 7 and 8, a method of wrapping the bale 33 of crop material with the wrap material 56 is also provided. The method includes positioning the wrap system 58 relative to the path 106 to form the wrap angle between the orbital plane 76 of the orbital support 70 and the path 106. The wrap system 58 is positioned so that the wrap angle has a value less than ninety degrees. For example, the wrap system 58 may be positioned so that the wrap angle is between the range of forty degrees (40°) and eighty degrees (80°).

Once the wrap system 58 is positioned to form the desired wrap angle, a first bale 110 of crop material is formed within the baling chamber 32 of the crop baling implement 20. The manner in which the first bale 110 is formed is known to those skilled in the art, and is therefore not described in detail herein. As the first bale 110 is formed, the first bale 110 moves along the path 106 rearward of the baling chamber 32 at a first discharge speed. It should be appreciated that the first discharge speed is relative to the crop baling implement 20, and more specifically, to the bale chute 62.

As the rearward end face 54 of the first bale 110 nears or passes through open central region 74 of the orbital support 70, the drive 82 begins to rotate the orbital support 70 about the wrap axis 72, thereby moving the wrap roller 86 around the periphery of the bale 33. As such, the first bale 110 is wrapped with the wrap material 56 via a wrap system 58 as the first bale 110 is moved along the path 106 at the first discharge speed.

In order to completely cover the rearward end face 54 of the bale 33 with the wrap material 56, it may be necessary to oscillate the wrap system 58 about the transverse axis 66 to vary the wrap angle as the rearward end face 54 passes through the orbital plane 76 of the orbital support 70. The wrap system 58 may be oscillated by repeatedly extending and retracting the actuator 80. Once the rearward end face 54 of the bale 33 is covered, the oscillation of the orbital support 70 may be stopped, and the orbital support 70 once again positioned to define the desired orbital angle 108.

As shown in FIG. 7, during normal operation of the crop baling implement 20, after the first bale 110 is formed, a second bale 112 of crop material is subsequently formed. The second bale 112 is formed within the baling chamber 32, subsequent to forming the first bale 110 and while the wrap system 58 is wrapping the rearward end of the first bale 110 with the wrap material 56. The second bale 112 is moved along the path 106 of the bale 33 rearward of the baling chamber 32 at the first discharge speed while the wrap system 58 is wrapping the first bale 110 with the wrap material 56. With both the first bale 110 and the second bale 112 moving at the first discharge speed, the second bale 112 may push out the first bale 110, and/or be disposed very near the first bale 110. As such, as shown in FIG. 7, the rearward end face 54 of the second bale 112 may be disposed in contact with or very near the forward end face 52 of the first bale 110.

In order to separate the first bale 110 from the second bale 112 along the path 106 so that the wrap system 58 may wind the wrap material 56 around the forward end face 52 of the first bale 110, without interference from the rearward end face 54 of the second bale 112, the speed of the first bale 110 may be increased from the first discharge speed to a second discharge speed, while maintaining the speed of the second bale 112 at the first discharge speed. It should be appreciated that the second discharge speed is relative to the crop baling implement 20, and more specifically, to the bale chute 62. By doing so, the first bale 110 will move along the path 106 faster than the second bale 112, thereby providing separation 114 between the first bale 110 and the second bale 112, such as shown in FIG. 8. At the same time that the speed of the first bale 110 is increased to the second discharge speed, the rotational speed of the orbital support 70 may be changed accordingly, in order to maintain the same wrap material 56 coverage over the first bale 110.

In order to accelerate the first bale 110 relative to the second bale 112, the crop baling implement 20 may be equipped with an active bale discharger. The active bale discharger may include, but is not limited to, a mover that is operable to actively move the bale 33 along the bale 33 chute 62 and/or the tray 104. For example, the move may include, but is not limited to, a push bar, a drive wheel, a chain drive, or some other similar device capable of moving the first bale 110 at a faster speed than the second bale 112.

After the first bale 110 is separated from the second bale 112 along the path 106, the wrap system 58 may wrap the forward end face 52 of the first bale 110 with the wrap material 56 by rotating the orbital support 70 around the first bale 110. Once again, the fixed support 60 may be oscillated about the transverse axis 66 to ensure that the entire forward end face 52 of the first bale 110 is covered with the wrap material 56. The wrap cutter 88 may then be engaged to grasp, secure, and cut the wrap material 56. After which, the first bale 110 may be deposited on the ground, and the process repeated again.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A crop baling implement comprising:
a frame (28);
a baling chamber (32) attached to the frame (28) and configured to form crop material into a square bale (33, 110, 112) extending along a central longitudinal axis (36);
an orbital support (70) attached to the frame (28) rearward of the baling chamber (32) and rotatable about a wrap axis (72), the orbital support (70) defining an open central region (74) and positioned to receive the bale (33, 110, 112) from the baling chamber (32) and pass the bale (33, 110, 112) through the open central region (74) of the orbital support (70);
a wrap roller (86) attached to and moveable with the orbital support (70), wherein the wrap roller (86) is configured to support a roll of wrap material (56);
a drive (82) coupled to the orbital support (70) and operable to rotate the orbital support (70) and the wrap roller (86) about the wrap axis (72) to wrap the wrap material (56) around the bale (33, 110, 112) as the bale (33, 110, 112) moves through the open central region (74) of the orbital support (70); and
a fixed support (60) attached to the frame (28) and rotatably supporting the orbital support (70),
**characterized in that**
the crop baling implement further comprising a pivotal connection (64) interconnecting the frame (28) and the fixed support (60), wherein the pivotal connection (64) defines a transverse axis (66) with the fixed support (60) rotatable about the transverse axis (66) relative to the frame (28).

2. The crop baling implement set forth in claim 1, further comprising a plurality of roller assemblies (78) interconnecting the orbital support (70) and the fixed support (60) for rotation of the orbital support (70) relative to the fixed support (60).

3. The crop baling implement according to at least one of the claims 1 to 2, wherein the bale (33, 110, 112) follows a path (106) while moving through the open central region (74) of the orbital support (70), wherein the orbital support (70) is positioned to define an orbital plane (76) intersecting the path (106) of the bale (33, 110, 112) and forming an orbital angle (108) relative to the path (106) of the bale (33, 110, 112), and wherein the orbital angle (108) is variable with rotation of the fixed support (60) about the transverse axis (66).

4. The crop baling implement according to at least one of the claims 1 to 3, further comprising an actuator (80) interconnecting the frame (28) and the fixed support (60), wherein the actuator (80) is operable to rotate the fixed support (60) about the transverse axis (66).

5. The crop baling implement according to at least one of the claims 1 to 4, wherein the bale (33, 110, 112) follows a path (106) while moving through the open central region (74) of the orbital support (70), wherein the orbital support (70) is positioned to define an orbital plane (76) intersecting the path (106) of the bale (33, 110, 112) and forming an orbital angle (108) relative to the path (106) of the bale (33, 110, 112).

6. The crop baling implement according to at least one of the claims 1 to 5, wherein the orbital angle (108) is between the range of forty degrees (40°) and eighty degrees (80°), or between the range of one hundred degrees (100°) and one hundred forty degrees (140°).

7. The crop baling implement according to at least one of the claims 1 to 6, further comprising a wrap cutter (88) attached to and moveable with the orbital support (70), and disposed adjacent to the wrap roller (86), wherein the wrap cutter (88) is operable to secure and cut the wrap material (56) dispensed from the wrap roller (86).

8. The crop baling implement according to at least one of the claims 1 to 7, further comprising a tray (104) attached to the frame (28) and disposed rearward of the orbital support (70), wherein the tray (104) is positioned to receive the bale (33, 110, 112) passing through the open central region (74) of the orbital support (70).

## Patentansprüche

1. Erntegutballenpressvorrichtung, umfassend:
einen Rahmen (28);
eine Ballenpresskammer (32), die an dem Rahmen (28) befestigt und dazu ausgebildet ist, Erntegutmaterial zu einem Quaderballen (33, 110, 112) zu formen, der sich entlang einer zentralen Längsachse (36) erstreckt;
einen Umlaufträger (70), der an dem Rahmen (28) hinter der Ballenpresskammer (32) befestigt und um eine Wickelachse (72) drehbar ist, wobei der Umlaufträger (70) einen offenen Mittelbereich (74) definiert und so positioniert ist, dass er den Ballen (33, 110, 112) aus der Ballenpresskammer (32) empfängt und den Ballen (33, 110, 112) durch den offenen Mittelbereich (74) des Umlaufträgers (70) führt;
ein Wickelroller (86), der an dem Umlaufträger (70) angebracht und mit diesem bewegbar ist, wobei der Wickelroller (86) dazu ausgebildet ist, eine Rolle von Wickelmaterial (56) zu halten;
einen Antrieb (82), der mit dem Umlaufträger (70) gekoppelt und betreibbar ist, um dem Umlaufträger (70) und den Wickelroller (86) um die Wickelachse (72) zu drehen, um das Wickelmaterial (56) um den Ballen (33, 110, 112) zu wickeln, wenn sich der Ballen (33, 110, 112) durch den offenen Mittelbereich (74) des Umlaufträgers (70) bewegt; und einen feststehenden Träger (60), der an dem Rahmen (28) angebracht ist und den Umlaufträger (70) drehbar trägt,
**dadurch gekennzeichnet, dass**
die Erntegutballenpressvorrichtung ferner eine Schwenkverbindung (64) umfasst, die den Rahmen (28) und den feststehenden Träger (60) miteinander verbindet, wobei die Schwenkverbindung (64) eine Querachse (66) definiert, wobei der feststehende Träger (60) um die Querachse (66) relativ zum Rahmen (28) drehbar ist.

2. Erntegutballenpressvorrichtung gemäß Anspruch 1, ferner umfassend eine Vielzahl von Walzenanordnungen (78), die den Umlaufträger (70) und den feststehenden Träger (60) zum Drehen des Umlaufträgers (70) relativ zum feststehenden Träger (60) miteinander verbinden.

3. Erntegutballenpressvorrichtung gemäß mindestens einem der Ansprüche 1 bis 2, wobei der Ballen (33, 110, 112) beim Bewegen durch den offenen Mittelbereich (74) des Umlaufträgers (70) einem Weg (106) folgt, wobei der Umlaufträger (70) so angeordnet ist, dass er eine Umlaufebene (76) definiert, die den Weg (106) des Ballens (33, 110, 112) schneidet und einen Umlaufwinkel (108) relativ zum Weg (106) des Ballens (33, 110, 112) bildet, wobei der Umlaufwinkel (108) mit der Drehung des festen Trägers (60) um die Querachse (66) variabel ist.

4. Erntegutballenpressvorrichtung gemäß mindestens einem der Ansprüche 1 bis 3, ferner umfassend einen Aktuator (80), der den Rahmen (28) und den feststehenden Träger (60) miteinander verbindet, wobei der Aktuator (80) dazu betätigbar ist, den feststehenden Träger (60) um die Querachse (66) zu drehen.

5. Erntegutballenpressvorrichtung gemäß mindestens einem der Ansprüche 1 bis 4, wobei der Ballen (33, 110, 112) beim Drehen durch den offenen Mittelbereich (74) des Umlaufträgers (70) einem Weg (106) folgt, wobei dem Umlaufträger (70) so angeordnet ist, dass er eine Umlaufebene (76) definiert, die den Weg (106) des Ballens (33, 110, 112) schneidet und einen Umlaufwinkel (108) relativ zum Weg (106) des Ballens (33, 110, 112) bildet.

6. Erntegutballenpressvorrichtung gemäß mindestens einem der Ansprüche 1 bis 5, wobei der Umlaufwinkel (108) zwischen vierzig Grad (40°) und achtzig Grad (80°) oder zwischen hundert Grad (100°) und hundertvierzig Grad (140°) liegt.

7. Erntegutballenpressvorrichtung gemäß mindestens einem der Ansprüche 1 bis 6, ferner umfassend einen Wickelschneider (88), der an dem Umlaufträger (70) angebracht und mit diesem bewegbar ist und neben dem Wickelroller (86) angeordnet ist, wobei der Wickelschneider (88) dazu betreibbar ist, das aus dem Wickelroller (86) abgegebene Wickelmaterial (56) zu sichern und zu schneiden.

8. Erntegutballenpressvorrichtung gemäß mindestens einem der Ansprüche 1 bis 7, ferner umfassend eine an dem Rahmen (28) angebrachte und hinter dem Umlaufträger (70) angeordnete Ablage (104), wobei die Ablage (104) dazu positioniert ist, den durch den offenen Mittelbereich (74) des Umlaufträgers (70) hindurchtretenden Ballen (33, 110, 112) aufzunehmen.

## Revendications

1. Instrument de pressage de balles de récolte comportant :
un cadre (28) ;
une chambre (32) de pressage fixée au cadre (28) et configurée pour façonner du matériau de récolte en une balle carrée (33, 110, 112) s'étendant suivant un axe longitudinal central (36) ;
un support orbital (70) fixé au cadre (28) en arrière de la chambre (32) de pressage et pouvant tourner autour d'un axe (72) d'emballage, le support orbital (70) définissant une région centrale ouverte (74) et étant positionné pour recevoir la balle (33, 110, 112) provenant de la chambre (32) de pressage et faire passer la balle (33, 110, 112) à travers la région centrale ouverte (74) du support orbital (70) ;
un rouleau (86) d'emballage fixé au support orbital (70) et pouvant se déplacer avec celui-ci, le rouleau (86) d'emballage étant configuré pour porter une bobine de matériau (56) d'emballage ;
un moyen (82) d'entraînement couplé au support orbital (70) et exploitable pour faire tourner le support orbital (70) et le rouleau (86) d'emballage autour de l'axe (72) d'emballage pour enrouler le matériau (56) d'emballage autour de la balle (33, 110, 112) tandis que la balle (33, 110, 112) se déplace à travers la région centrale ouverte (74) du support orbital (70) ; et
un support fixe (60) fixé au cadre (28) et soutenant de façon tournante le support orbital (70),
**caractérisé en ce que**
l'instrument de pressage de balles de récolte comporte en outre une liaison pivot (64) interconnectant le cadre (28) et le support fixe (60), la liaison pivot (64) définissant un axe transversal (66), le support fixe (60) pouvant tourner autour de l'axe transversal (66) par rapport au cadre (28).

2. Instrument de pressage de balles de récolte selon la revendication 1, comportant en outre une pluralité d'ensembles (78) de galets interconnectant le support orbital (70) et le support fixe (60) pour la rotation du support orbital (70) par rapport au support fixe (60) .

3. Instrument de pressage de balles de récolte selon au moins une des revendications 1 à 2, la balle (33, 110, 112) suivant un trajet (106) tandis qu'elle se déplace à travers la région centrale ouverte (74) du support orbital (70), le support orbital (70) étant positionné pour définir un plan orbital (76) qui croise le trajet (106) de la balle (33, 110, 112) et formant un angle orbital (108) par rapport au trajet (106) de la balle (33, 110, 112), et l'angle orbital (108) étant variable avec la rotation du support fixe (60) autour de l'axe transversal (66).

4. Instrument de pressage de balles de récolte selon au moins une des revendications 1 à 3, comportant en outre un actionneur (80) interconnectant le cadre (28) et le support fixe (60), l'actionneur (80) étant exploitable pour faire tourner le support fixe (60) autour de l'axe transversal (66).

5. Instrument de pressage de balles de récolte selon au moins une des revendications 1 à 4, la balle (33, 110, 112) suivant un trajet (106) tandis qu'elle se déplace à travers la région centrale ouverte (74) du support orbital (70), le support orbital (70) étant positionné pour définir un plan orbital (76) qui croise le trajet (106) de la balle (33, 110, 112) et formant un angle orbital (108) par rapport au trajet (106) de la balle (33, 110, 112).

6. Instrument de pressage de balles de récolte selon au moins une des revendications 1 à 5, l'angle orbital (108) se situant dans la plage comprise entre quarante degrés (40°) et quatre-vingt degrés (80°), ou dans la plage comprise entre cent degrés (100°) et cent quarante degrés (140°).

7. Instrument de pressage de balles de récolte selon au moins une des revendications 1 à 6, comportant en outre un moyen (88) de découpe d'emballage fixé au support orbital (70) et pouvant se déplacer avec celui-ci, et disposé de façon adjacente au rouleau (86) d'emballage, le moyen (88) de découpe d'emballage étant exploitable pour immobiliser et couper le matériau (56) d'emballage distribué à partir du rouleau (86) d'emballage.

8. Instrument de pressage de balles de récolte selon au moins une des revendications 1 à 7, comportant en outre un plateau (104) fixé au cadre (28) et disposé en arrière du support orbital (70), le plateau (104) étant positionné pour recevoir la balle (33, 110, 112) passant à travers la région centrale ouverte (74) du support orbital (70).
